# EUROPEAN PATENT SPECIFICATION

(11) **EP 1 650 101 B1**
(45) Date of publication and mention of the grant of the patent: **19.09.2007**
(21) Application number: 05022881.6
(22) Date of filing: 20.10.2005
(51) Int. Cl.: B62D 1/28

(54) **Steering control apparatus**
Lenkregeleinrichtung
Appareil de commande de direction

(30) Priority: 25.10.2004 JP 2004309285
(43) Date of publication of application: 26.04.2006
(73) Proprietor: JTEKT CORPORATION, Chuo-ku, Osaka-shi, Osaka 542-8502 (JP)
(72) Inventor: Ito, Akira, Okazaki-shi Aichi-ken (JP)
(74) Representative: TBK-Patent

(56) References cited:
- EP-A- 1 588 922
- US-A- 5 629 595
- US-A1- 2003 050 748
- US-B1- 6 178 365
- US-B1- 6 256 561

## Description

The present invention relates to a steering control apparatus for an automotive vehicle, which is changeable between a manual steering mode and an automatic steering mode.

There has been developed and placed on the market in recent years an automotive vehicle wherein a steering control apparatus is changeable between steering the vehicle in a manual steering mode and in an automatic steering mode. In the automatic steering mode, for example, an automatic garaging mode, the vehicle can be conveniently steered automatically to be parked in a garage. In the concrete, the vehicle is stopped at a starting position close to the garage, and the automatic steering mode is activated, wherein a target position in the garage and a path along which the vehicle runs from the starting position to the target position are estimated, and a steered angle of steered wheels (e.g., front wheels of the vehicle) at each position along the path is calculated. Thereafter, when a driver operates an accelerator and a brake pedal, the vehicle runs with the steered wheels being automatically steered so that deviation of the steered angle of the steered wheels detected by a sensor at each position of the path from the calculated steered angle becomes zero, and thereby even an unskilled driver can easily park the vehicle in the garage as described in Japanese unexamined, published patent application No. 2004-42769.

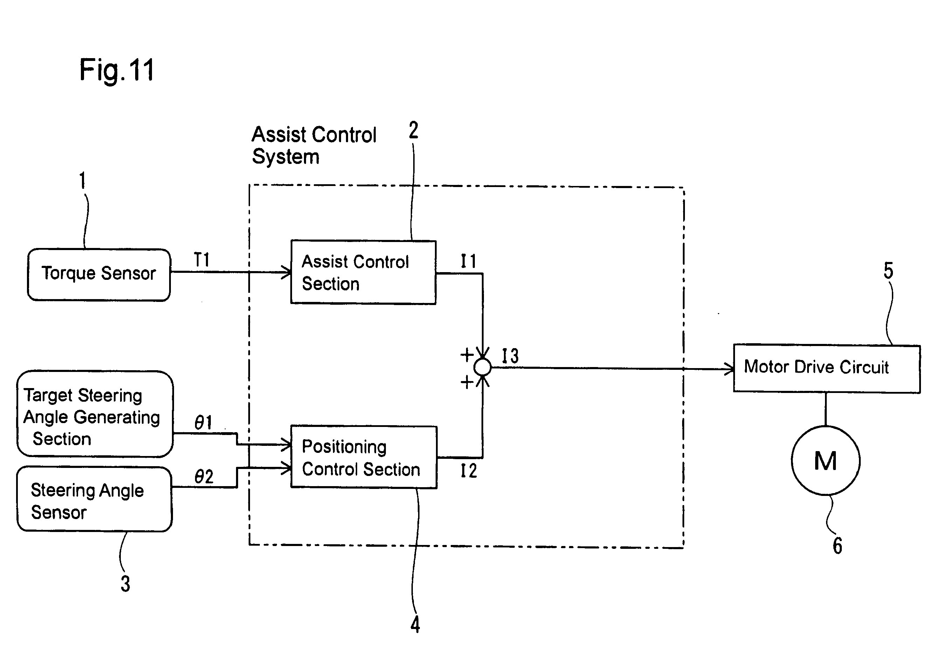

In general, in the abovementioned vehicle, an electric motor for assisting the driver in operating the steering wheel (i.e., power steering) in the manual steering mode is used as a driving device that drives steered wheels under positioning control in the automatic steering mode. As shown in Figure 11, the steering control apparatus in the prior art is provided with an assist control section 2 for controlling an assist force (or an assist torque) generated by the electric motor and a positioning control section 4 for controlling angular position of the steered wheels.

And, a torque sensor 1 detects a loaded torque T1 applied to a steering shaft, and the assist control section 2 calculates an electric current command value I1 for the assist control based on the loaded torque T1. A steering angle sensor 3 detects a rotational angle (hereinafter referred to as "steering angle θ2") of the steering wheel, and the positioning control section 4 calculates an electric current command value I2 for the positioning control I2 based on the deviation between the actual steering angle θ2 and the target steering angle θ1 determined relative to each target position along the path to which the vehicle is to run.

The steering control apparatus in the prior art outputs in the manual steering mode the electric current command value l1 for the assist control as an electric current command value I3 (= I1) for the electric motor to a motor drive circuit 5, and outputs in the automatic steering mode the sum of the electric current command value I1 for the assist control and an electric current command value I2 for the positioning control as the electric current command value I3 (= I1 + I2) for the electric motor to the motor drive circuit 5. And, the motor drive circuit 5 supplies the electric current corresponding to the electric current command value I3 to the electric motor 6, there by to steer the steered wheels.

By the way, if the driver operates the steering wheel in the automatic steering mode so that the actual steering angle θ2 differs from the target steering angle θ1, an electric current command value I1 for the assist control becomes positive and an electric current command value I2 for the positioning control becomes negative, and vice versa. In the concrete, when the actual steering angle θ2 deviates from the target steering angle θ1,for example, in the clockwise direction (hereinafter referred to as "positive direction", and a reverse direction is referred to as "negative direction), the positioning control section 4 calculates the electric current command value I2 for the positioning control, which causes the electric motor 6 to steer the steering wheel to the negative direction so as to make the actual steering angle θ2 coincide with the target steering angle θ1. As a result, since the steering wheel is steered to the negative direction contrary to the driver's operation of the steering wheel, the driver operates the steering wheel against it thereby to increase the loaded torque T1. The assist control section 2 calculates the electric current command value I1 for the assist control, which causes the electric motor 6 to steer the steering wheel to the positive direction so as to decrease the loaded torque T1. As mentioned above, If the driver operates the steering wheel while the automatic steering mode is active, the electric current command value I1 for the assist control becomes positive and the electric current command value I2 for the positioning control becomes negative, and vice versa, thereby to decrease the electric current command value I3 for the electric motor, which is the sum of the electric current command value I1 for the assist control and an electric current command value I2 for the positioning control. Therefore, when it becomes necessary that the driver steers the steering wheel for some reason while the automatic steering mode is active, the driver has to steer the steering wheel in a state wherein the electric motor 6 does not generate enough assist force (or assist torque) for assisting driver's steering operation.

Furthermore, prior art document EP 1 588 922 A2 (earlier patent document, published after the filing date of the present application) discloses a lane-keep control system and a method for a vehicle, wherein the operating conditions of the vehicle and specifically the travelling conditions thereof are monitored. Corresponding information is input to a controller. The controller includes a steering intention detection section which detects whether a driver has the intention to operate a steering wheel to steer a vehicle. A first steering torque control section controls a steering torque according to the travelling conditions of the vehicle, when the driver has no intention to steer the vehicle, to keep the vehicle at a predetermined position between lane markings of a travelling lane. A second steering torque control section exhibits a control when the driver has an intention to steer the vehicle. In this case the steering torque according to the travelling condition is controlled so that the steering operation of the driver is readily reflected on steering of the vehicle. A corresponding steering torque is detected by a steering torque sensor. A steering angle sensor detects an actual steering angle which can be compared with a target steering angle calculated by a target steering angle calculation section. The target steering angle is necessary for the vehicle to keep a predetermined position between the lane markings.
Corresponding steering torque command values are output to a steering actuator which applies a corresponding steering force to the steering system of the vehicle.

Prior art document US 2003/0050748 A1 discloses an automatic steering device, which provides a control so that a steering torque is applied to a steering system in an automatic steering mode, the control being performed by a controller on the basis of an automatic steering torque value and a target assist torque value. An actuator is controlled by the controller so as to apply a torque corresponding to a sum of the automatic steering torque value and the target assist torque value to the steering shaft. The controller calculates the target assist torque value by multiplying an assist torque gain by steering torque applied by an operator of the vehicle from the steering wheel to the steering shaft. The assist torque gain is different in the automatic steering mode and the non-automatic steering mode.

Prior art document US 5 629 595 discloses a method of and an apparatus for an amusement ride having an interactive guided vehicle, wherein a vehicle is guided along a path defined by a centreline and left and right boundaries of a lane for travelling the vehicle. An electric sensor is provided for detecting the centre of the path along which the vehicle is to be guided, and the position of the vehicle relative to the travelling lane including an electrical conductor is monitored and defined. A steering operation is performed depending upon the deviation of the position of the vehicle from the ideal course on the lane including the electrical conductor, and the control concept also takes into consideration a steering angle of the vehicle defined by a passenger. While the passenger is permitted to steer the vehicle the vehicle is kept within a certain envelope (operation range) relative to the lane and in particular to the electrical conductor arranged in the lane. Furthermore, the operating conditions of the vehicle such as the operation of an accelerator pedal or a brake pedal are considered. The control basically controllably influences the vehicle's natural position relative to the electrical conductor in the lane.

Prior art document US 6 256 561 B1 discloses a vehicle steering control system, wherein an electric motor is used for providing the assisting torque to the steering system of the vehicle in a controlled manner. A navigation system arranged in the vehicle is operated and the output thereof is used to correct the detected steering angle input by the vehicle driver. The further running conditions of the vehicle are monitored and considered. Control is further performed depending upon road condition information taken from the navigation system.

Prior art document US 6 178 365 B1 discloses a steering control system for a vehicle, wherein an electric motor is used for providing the assistance of the steering system of the driven wheels of the vehicle. The control of the motor takes into consideration road conditions of the road on which the vehicle is travelling, and the road conditions are detected by a CCD camera and the image is subjected to further date evaluation to obtain corresponding control data. In an automatic operation a steering assist torque is calculated by a steering assist torque calculating unit, this torque being necessary for holding the lane when the vehicle is travelling. The further operating conditions of the vehicle are taken into account, such as vehicle speed and steering torque applied to a steering system. Two operation modes are provided which can be selected by the driver. Specifically, a switching is possible of the mode of control from the lane holding steering torque assist to the torque assist of the ordinary power steering in response to the driver's intention. Smooth switching is provided to avoid any sudden change in the steering conditions of the vehicle.

Accordingly, it is a primary object of the present invention to provide an improved steering control apparatus, wherein a driver can easily operate a steering wheel while the automatic steering mode is active so as to steer the vehicle in coping with any situation.

This object is accomplished according to the present invention by a steering control apparatus for an automobile vehicle as set out in the appended claims.

Briefly, according to the present invention, there is provided a steering control apparatus for an automobile vehicle wherein a driver can easily operate a steering wheel while an automatic steering mode is active. The steering control apparatus is changeable between a manual steering mode wherein an electric motor assists driver's steering operation to steer steered wheels and the automatic steering mode wherein the steered wheels are steered by the electric motor under positioning control to run the vehicle to a predetermined target position without the driver's manual steering operation. The steering control system provided in the steering control apparatus comprises an assist control section for calculating an electric current command value for the assist control based on a loaded torque, a positioning control section for calculating an electric current command value for the positioning control based on a deviation between a target steering angle determined according to the target position and an actual steering angle of the steered wheels, an electric current changeover section for outputting the electric current command value for the assist control as an electric current command value for the electric motor in the manual steering mode and the sum of the electric current command value for the assist control and the electric current command value for the positioning control as the electric current command value for the electric motor in the automatic steering mode, and a command value checking section for determining whether the electric current command value for the assist control is more than a predetermined threshold value in the automatic steering mode. The electric current changeover section is operable to change the steering control apparatus from the automatic steering mode to the manual steering mode when the electric current command value for the assist control is more than the predetermined threshold value while the automatic steering mode is active, and to continue the automatic steering mode when the electric current command value for the assist control is not more than the predetermined threshold value while the automatic steering mode is active.

With this structure, if the driver operates the steering wheel while the automatic steering mode is active so as to apply the loaded torque to a steering shaft, the electric current command value for the assist control becomes more than the predetermined threshold value, thereby to change the steering control apparatus from the automatic steering mode to the manual steering mode. Even though the driver touches the steering wheel lightly or the loaded torque is applied to the steering shaft because of inertia of the steering wheel or a friction force of the steering system while the automatic steering mode is active, the electric current command value for the assist control corresponding to such a light loaded torque is not more than the threshold value, and thereby the automatic steering mode is continued. According to the present invention, the steering control system can determine whether the driver operates the steering wheel by checking whether the electric current command value for the assist control is more than the predetermined threshold value while the automatic steering mode is active. And, as the operation of the steering wheel is given precedence to continuation of the automatic steering mode in determining whether the steering control apparatus is changed from the automatic steering mode to the manual steering mode, the driver can easily rotate the steering wheel in a state where the electric motor generates enough assist force in coping with any situation where steering is required in the automatic steering mode.

"An actual steering angle" recited in the claimed invention includes a rotational angle of a part (e.g., steering wheel, steering shaft, rotor of the electric motor, rack shaft etc.) that rotates or linearly moves in connection with variation of the steered angle of the steered wheels. "A target steering angle" recited in the claimed invention includes a target steered angle, a target rotational angle, or target position of the linear movement of a parts that rotates or linearly moves in connection with variation of the steered angle of the steered wheels.

### BRIEF DESCRIPTION OF THE ACCOMPANYING DRAWINGS

The foregoing and other objects and many of the attendant advantages of the present invention may readily be appreciated as the same becomes better understood by reference to the preferred embodiments of the present invention when considered in connection with the accompanying drawings, wherein like reference numerals designate the same or corresponding parts throughout several views, and in which:
Figure 1 is a schematic view showing the general structure of the vehicle with the steering control apparatus in the first embodiment according to the present invention;
Figure 2 is a flow chart of the program for calculating the current command value for the electric motor;
Figure 3 is a flow chart for executing the assist control process;
Figure 4 is a flow chart for executing the positioning control process;
Figure 5 is a block diagram showing the structure of the steering control apparatus;
Figure 6 is a block diagram showing the structure of the assist control section;
Figure 7 is a block diagram showing the structure of the positioning control section;
Figure 8 is a flow chart of the program for calculating the current command value for the electric motor in the second embodiment;
Figure 9 is a flow chart for executing the positioning control process in the second embodiment;
Figure 10 is a schematic view showing the general structure of the vehicle with another steering control apparatus; and
Figure 11 is a block diagram showing the structure of the steering control apparatus in the prior art;

### DETAILED DESCRIPTION OF THE PREFERRED EMBODIMENT

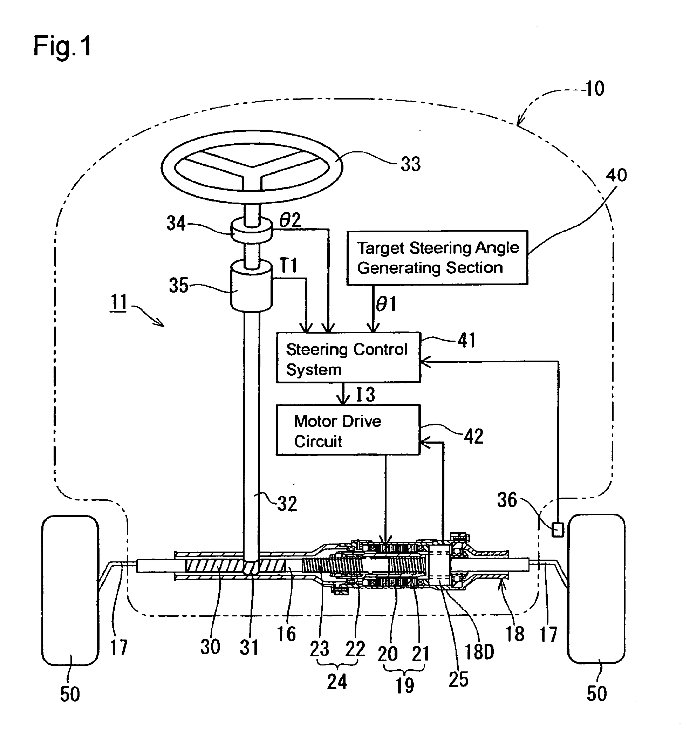

Hereafter, a steering control apparatus11 in the first embodiment according to the present invention will be described with reference to Figures 1 to 7. An automotive vehicle 10 shown in Figure 1 is provided with a so-called electric power steering control apparatus 11 for controlling the assist force which an electric motor 19 (e.g., brushless electric motor) generates in dependence upon the torque exerted on the steering wheel 33 by a driver and is applied to steered wheels 50, 50 (e.g., front wheels of the vehicle). In the concrete, a rack shaft 16 extends through a cylindrical housing 18 between the steered wheels 50, 50 and opposite ends of the rack shaft 16 are connected to the steered wheels 50, 50 via tie rod 17, 17 outside the housing 18. The housing 18 is mounted on a body of the vehicle 10. There is provided with a large-diameter portion 18D on the axially middle portion of the housing 18, wherein the electric motor 19 is accommodated. The electric motor is composed of a stator 20 that is fixedly fitted in the interior of the large-diameter portion 18D, and a cylindrical rotor 21 that is rotatably provided in an inner bore of the stator 20. The rack shaft 16 extends through the stator 20. A motor rotational angle sensor 25 (e.g., resolver) is provided at an end portion of the large-diameter portion 18D of the housing 18.

A ball nut 22 is fixedly fitted in the inner bore of the rotor 21, and a screw portion 23 is formed on the axially middle portion of the rack shaft 16. A ball screw mechanism 24 is composed of the ball nut 22 and the screw portion 23. When the ball nut 22 is rotated by the rotor 21, the ball screw portion 23 is linearly moved relative to the housing 18, and thereby the steered wheels 50, 50 are steered.

Formed on one end portion of the rack shaft 16 is a rack 30 that is meshing engagement with a pinion 31 provided at the lower end portion of the steering shaft 32 (which corresponds to a rotational shaft of a steering wheel as recited in the claimed invention). The steering wheel 33 is attached to the upper end of the steering shaft 32.

A steering angle sensor 34 is provided on the upper end portion of the steering shaft 32. The steering angle sensor 34 detects a rotational angle of the steering shaft 32 (i.e., a steering angle of the steering wheel 33) as "an actual steering angle of steered wheels" recited in the claimed invention. Hereinafter, the steering angle detected by the steering angle sensor 34 is referred to as "the actual steering angle θ2".

A torque sensor 35 is provided on the steering shaft 32 at the position lower than the steering angle sensor 34. The torque sensor 35 is composed of a torsion bar (not shown) that is twisted according to the loaded torque T1 applied to the steering shaft 32, and a pair of resolvers (not shown) for detecting the differential angle between the respective ends of the torsion bar. The torque sensor 35 detects the loaded torque T1 applied to the steering shaft 32 based on the differential angle between the rotational angles of the respective ends of the torsion bar, which are detected by the resolvers. And, a vehicle speed sensor 36 for detecting a vehicle speed based on a rotational speed of the steered wheel 50 is provided near the steered wheel 50.

An automatic steering control system (not shown) is provided in the steering control apparatus 11 mounted on the vehicle 10 in the embodiment according to the present invention. The automatic steering control system starts to work when the automatic steering mode is selected by a mode selector switch (not shown) on an operation panel, wherein the steering control apparatus 11 comes to be in the automatic steering mode. Before the operator runs the vehicle under the automatic steering control, a target position, to which the vehicle 10 is to run, is predetermined. Then, a target steering angle generating section 40 that is provided in the automatic steering control system calculates a running path from a starting position to the target position, and calculates to output target steering angles θ1 at respective positions along the path. A steering control system 41 recited in the claimed invention calculates an electric current command value I3 for the electric motor based on the target steering angle θ1 from the target steering angle generating section 40. And, a motor drive circuit 42 supplies the electric current corresponding to the electric current command value I3 to the electric motor 19, so that the actual steering angle θ2 of the steering wheel 33 is positioned to the target steering position θ1 by the electric motor 19. Thereby, the driver can run the vehicle 10 along the running path calculated by the target steering angle generating section 40 with just operating an accelerator and a brake pedal so as to move the vehicle to the predetermined target position. Accordingly, for example, an unskilled driver can easily park the vehicle in the garage by setting the target position in a garage, or it is possible that partial operation of the steering wheel for steering a bus that runs along a predetermined route can be replaced with the automatic steering control.

When the automatic steering mode is cancelled, the manual steering mode is activated, wherein the driver has to manually operate the steering wheel 33. In the manual steering mode, the electric motor 19 generates an assist force (or assist torque) for assisting driver's steering operation.

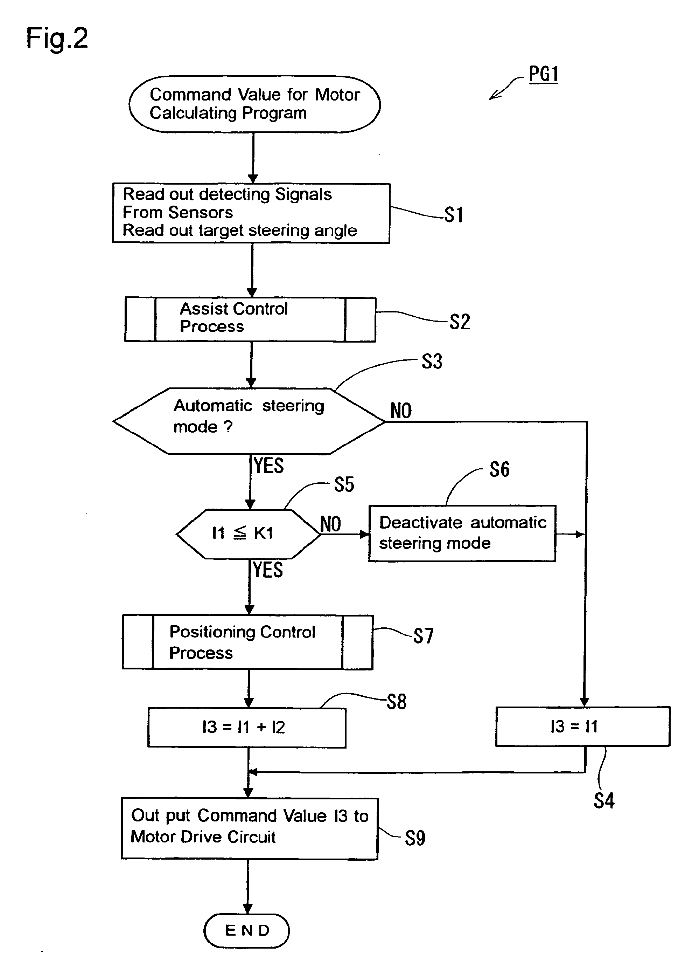

The steering control system 41 can execute steering operation in both the manual steering mode and the automatic steering mode by repetitively executing an electric current command value calculating program PG1 shown in Figure 2 for example at a predetermined time interval. In the concrete, when the calculating program PG1 is executed, the steering control system 41 reads out respective detecting signals (actual steering angle θ2, loaded torque T1 and vehicle speed V) detected by the steering angle sensor 34, the torque sensor 35 and the vehicle speed censor 36 as well as the target steering angle θ1 calculated by the target steering angle generating section 40 (step S1).

Then, an assist control process (step S2) is executed so as to calculate an electric current command value I1 for the assist control as recited in the claimed invention. A concrete structure of the assist control process (step S2) will be described later.

After executing the assist control process (step S2), the steering control system 41 determines whether the automatic steering mode is active or not (step S3). If the answer is "No" (step S3), wherein the automatic steering mode is not active, that is, the manual steering mode is active, the steering control system 41 outputs the electric current command value I1 for the assist control to the motor drive circuit 42 as an electric current command value I3 for the electric motor (step S4, S9).

If the answer at step S3 is "Yes", wherein the automatic steering mode is active, the steering control system 41 determines whether the electric current command value I1 is less than a predetermined threshold value K1 or not (step S5). If the answer at step S5 is "No", wherein the electric current command value I1 for the assist control is more than a predetermined threshold value K1, the steering control system 41 outputs the electric current command value I1 for the assist control to a motor drive circuit 42 as the electric current command value l3 for the electric motor (step S4, S9).

If the electric current command value I1 for the assist control is less than the predetermined threshold value K1 (i.e., the answer at step S5 is "Yes"), the steering control system 41 executes the positioning control process (step S7) to calculates an electric current command value I2 for the positioning control, and outputs the sum of the electric current command value I1 for the assist control and the electric current command value I2 for the positioning control to the motor drive circuit 42 as the electric current command value I3 for the electric motor (step S8, S9). A concrete structure of the positioning control process (step S7) will be described later.

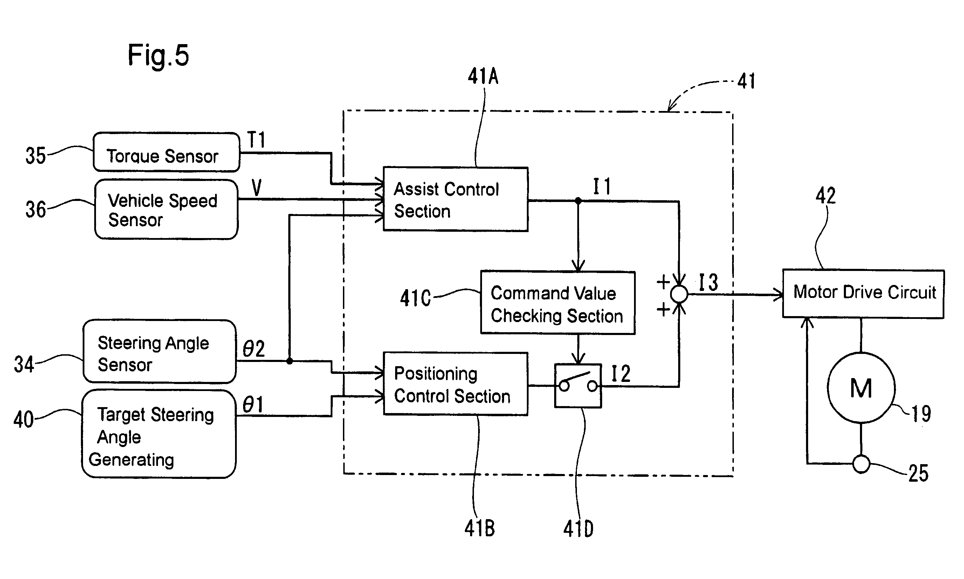

When the electric current command value I3 for the electric motor is outputted to the motor drive circuit 42 (step S9), the execution of the electric current value calculating program PG1 is terminated. The calculating program PG1 is repeatedly executed at a predetermined time interval. The execution of the calculating program PG1 corresponds to a control system as indicated by a block diagram shown in Figure 5. An assist control section 41A shown in Figure 5 corresponds to the assist control process (step S2), a positioning control section 41B corresponds to the positioning control process (step S7), and a command value checking section 41C and a positioning control current changeover section 41D corresponds to the step S5. The whole structure of the electric current value calculating program PG1 is as described hereinabove.

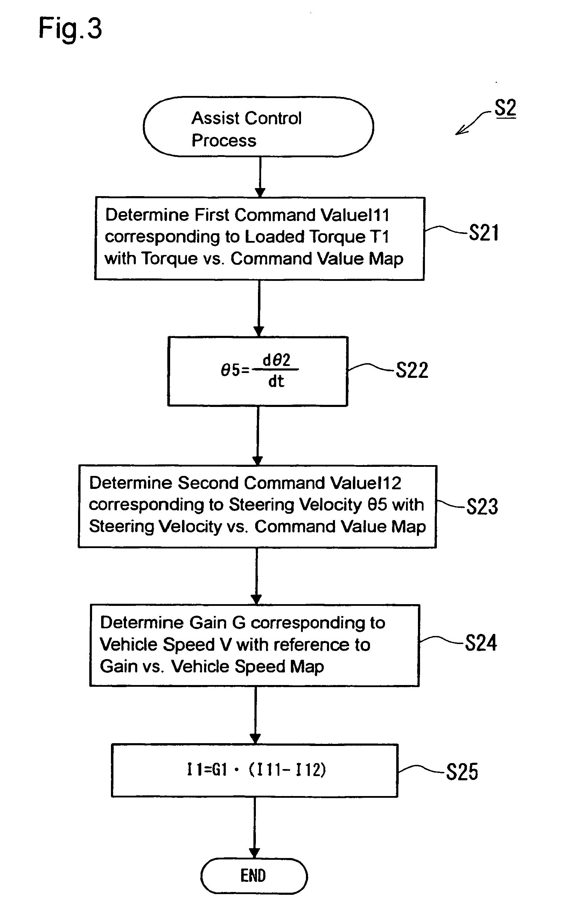

Next, the concrete structure of the assist control process (step S2) in the electric current value calculating program PG1 will be explained with reference to Figure 3. When the assist control process (step S2) is executed, the steering control system 41 determines at step S21 a first electric current command value I11 corresponding to the loaded torque T1 by reference to a loaded torque vs. electric current command value characteristic map (not shown). Then, the control system 41 calculates a steering angular velocity θ5 by differentiating the actual steering angle θ2 by time (step S22), and determines at step S23 a second electric current command value I12 corresponding to the steering angular velocity θ5 by reference to a steering angular velocity θ5 vs. electric current command value characteristic map (not shown). The control system 41 determines a gain G1 corresponding to the vehicle speed V by reference to a vehicle speed vs. gain characteristic map (step S24). The control system 41 calculates the electric current command value I1 (= G1 × (I11 - I12)) for the assist control by multiplying the difference between the first electric current command value l11 and the second electric current command value I12 by the gain G1 (step S25) and terminates to executes the assist control process (step S2).

The above-mentioned loaded torque vs. electric current command value characteristic map is of configuration where, for instance, the first electric current increases as the loaded torque T1 increases. Thereby, the increment of the loaded torque T1 can be decreased by the assist torque generated by the electric motor 19 corresponding to the first electric current command value I11 so that the driver can operate the steering wheel with feeling a stable steering reaction force applied thereto.

The steering angular velocity vs. electric current command value map is of configuration where the second electric current command value I12 increases as the steering angular velocity θ5 increases. As the second electric current command value I12 is subtracted from the first electric current command value, a steering resistance i.e., a resistance to the rotation of a steering shaft 32 becomes large when the steering wheel 33 is rotated rapidly, and thereby the damping is afforded.

A vehicle speed vs. gain map is of configuration where the gain G decreases as the vehicle speed increases. Accordingly, the assist torque generated by the electric motor 19 is decreased as the vehicle speed increases, and thereby rotating the steering wheel 33 at a high angular velocity at a high vehicle speed is restrained, and the driver can operate the steering wheel 33 with ease at a high angular velocity at a low vehicle speed.

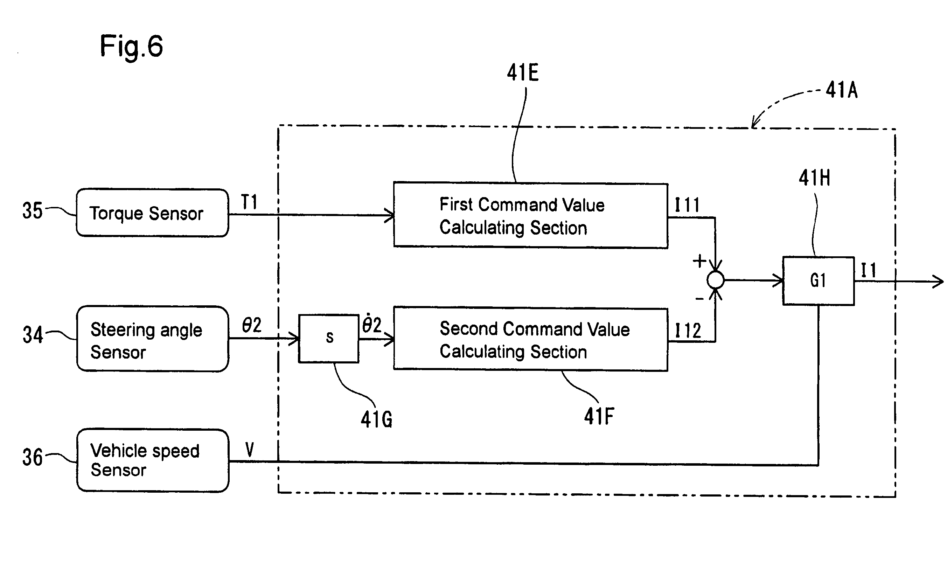

The execution of the assist control process (step S2) corresponds to the assist control section 41 A as indicated by a block diagram shown in Figure 6. A first electric current command value calculating section 41 E corresponds to the step S21, a second electric current command value calculating section 41F corresponds to the step S23, and a gain multiplying section 41H corresponds to the step S24 and S25. The whole structure of the assist control process (step S2) is as described hereinabove.

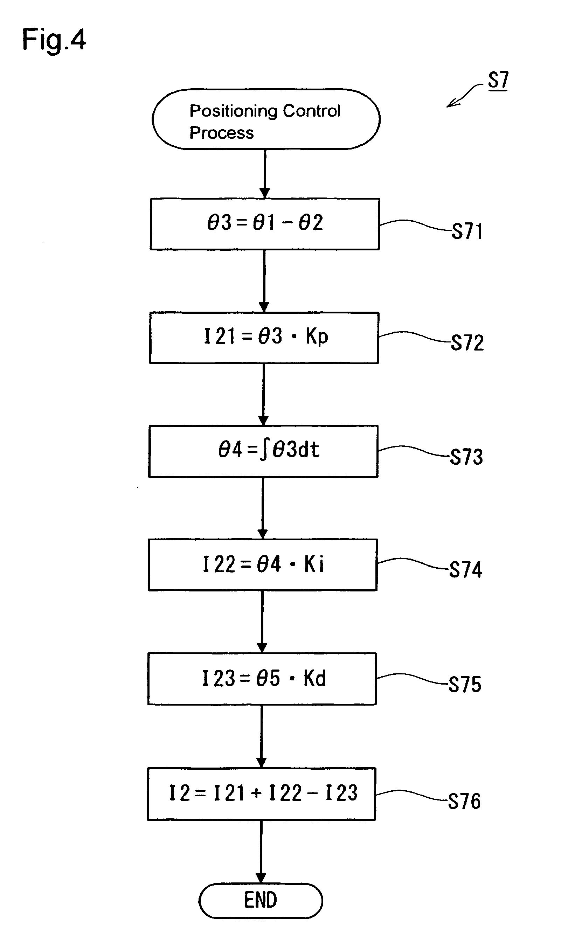

Next, the concrete structure of the positioning control process (step S7) in the electric current value calculating program PG1 will be explained with reference to Figure 4. When the positioning control process (step S7) is executed, the steering control system 41 calculates the deviation θ3 (= θ1 - θ2) between the target steering angle θ1 and the actual steering angle θ2 (step S71), and calculates a third electric current command value I21 by multiplying the deviation θ3 by a proportional constant Kp (step S72). In turn, the steering control system 41 calculates time-integrated value θ4 by integrating the deviation θ3 with respect to time (step S73), and calculates a fourth electric current command value I22 by multiplying the time-integrated value θ4 by a integral constant Ki (step S74). The control system 41 calculates a fifth electric current command value I23 by multiplying the steering angular velocity θ5 calculated by the assist control process (step S2) by a differential constant Kd (step S75), and calculates the electric current command value I2 for the positioning control (step S76) as recited in the claimed invention by subtracting the fifth electric current command value 123 from the sum of the third and fourth electric current command values I21 and I22. Then, the control system 41 terminates to execute the positioning control process (step S7).

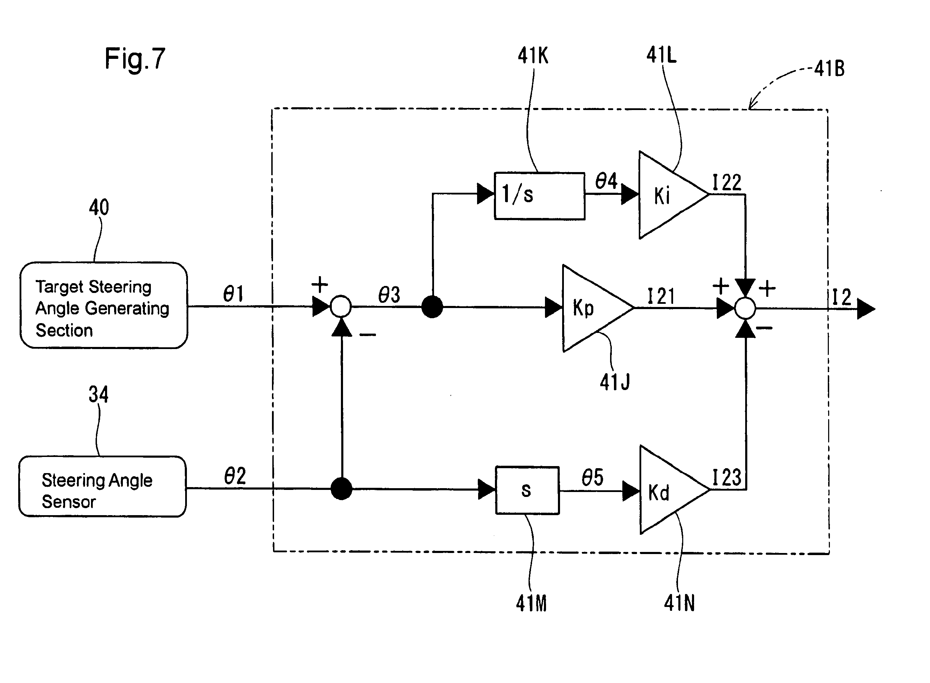

The execution of the positioning control process (step S7) corresponds to the positioning control section 41B as indicated by a block diagram shown in Figure 7. A proportional constant multiplying section 41J shown in Figure 7 corresponds to the step 72. An integral calculating section 41K corresponds to the step S73, and an integral constant multiplying section 41L corresponds to the step S74, and a differential constant multiplying section 41N corresponds to the step S75. A differential calculating section 41M corresponds to the step S22 of the abovementioned assist control process (step S2). The whole structure of the positioning control process S7 is as described hereinabove.

Next, the operation of the steering control apparatus 11 as constituted above in the first embodiment will be described hereinafter. When the steering control apparatus 11 of the vehicle 10 is in the manual steering mode, only the electric current command value I1 for the assist control that is calculated by the assist control section 41 A among the assist control section 41A and the positioning control section 41 B of the steering control system 41 shown in Figure 5 is outputted as the electric current command value I3 for the electric motor, so that the electric motor 19 generates the assist force (or assist torque) corresponding to the loaded torque T1 applied to the steering shaft 32. And, as mentioned above, the driver can operate the steering wheel 33 with feeling a stable steering reaction force applied thereto regardless of a coefficient of friction of a road surface. And, it requires a suitably large force to rotate the steering wheel 33 at a high vehicle speed, and the steering wheel 33 can be easily rotated at a low vehicle speed, so that the driver can run the vehicle safety.

When the driver operates the mode selector switch (not shown) to select the automatic steering mode, and sets the target position to which the vehicle is to run, the sum of the electric current command value I1 for the assist control calculated by the assist control section 41A of the steering control system 41 shown in Figure 5 and the electric current command value I2 for the positioning control calculated by the positioning control section 41B is outputted as the electric current command value I3 for the electric motor. And, the driver can run the vehicle to the predetermined target position by running the vehicle with just operating the accelerator and the brake pedal without operating the steering wheel 33, wherein the steered wheels 50 are steered by the electric motor 19 corresponding to the electric current command value I3 for the electric motor. Even though the driver touches the steering wheel 33 lightly or the loaded torque T1 is applied to the steering shaft 32 because of inertia of the steering wheel 33 or a friction force of the steering system while the automatic steering mode is active, the electric current command value I1 for the assist control calculated by the assist control section 41A based on such a light loaded torque T1 is less than the threshold value K1, and thereby the automatic steering mode is continued.

On the contrary, if the loaded torque T1 is applied to the steering shaft while the automatic steering mode is active because the driver operates the steering wheel 33, the electric current command value I1 for the assist control calculated by the assist control section 41A based on the loaded torque T1 becomes more than the threshold value K1, thereby to change the steering control apparatus 11 from the automatic steering mode to the manual steering mode.

As mentioned above, according to the embodiment, it can be determined whether the driver operates the steering wheel 33 in the automatic steering mode by checking whether the electric current command value I1 for the assist control becomes more than the threshold value K1 or not. And, as the operation of the steering wheel 33 is given precedence to continuation of the automatic steering mode in determining whether the steering control apparatus 11 is changed from the automatic steering mode to the manual steering mode, the driver can easily rotate the steering wheel 33 in a state where the electric motor 19 generates enough assist force in coping with any situation where steering is required in the automatic steering mode.

### (Second Embodiment)

In the abovementioned first embodiment, if the steering control apparatus 11 is changed from the manual steering mode to the automatic steering mode in a state where the last time-integrated value θ4 is still stored, the electric current command value I3 for the electric motor at a beginning of resumption of the automatic steering control mode becomes large because of the last time-integrated value θ4, thereby to cause the steered wheels 50 to be steered at an abnormally high angular velocity. However, as a second embodiment is provided with structure as described below, the abovementioned problem can be resolved.

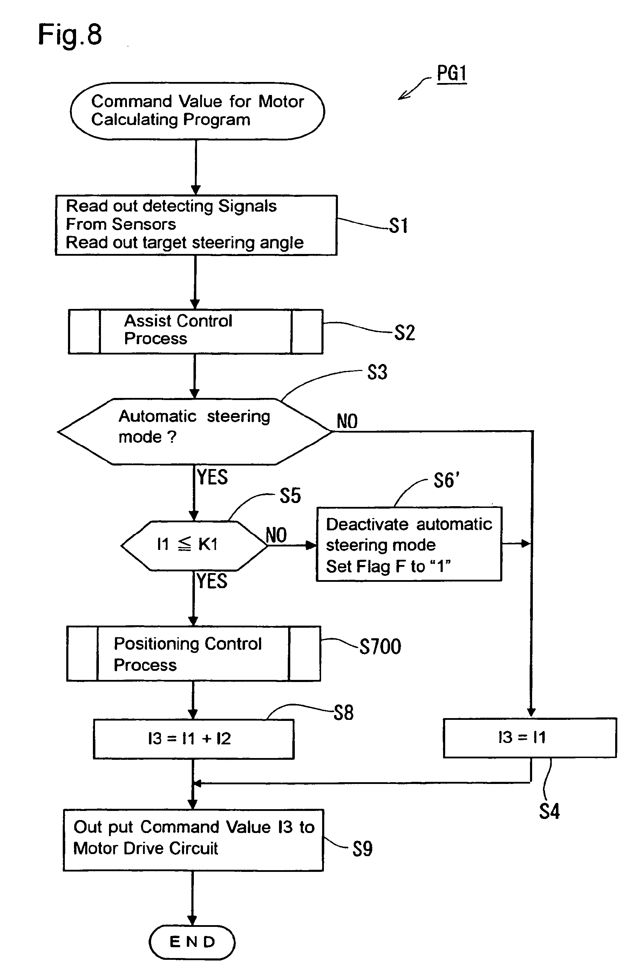

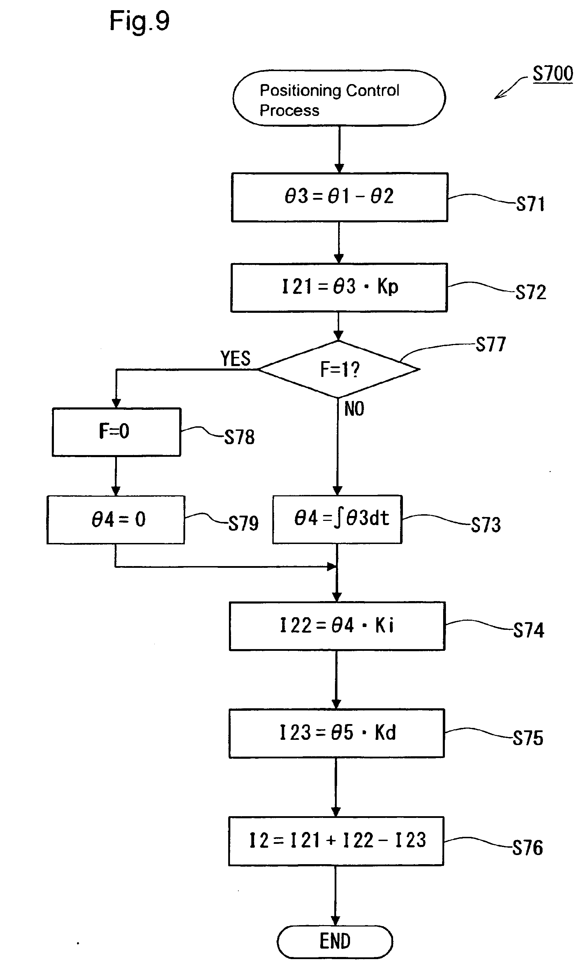

As shown in Figure 8 and 9, in the steering control system 41 of the second embodiment, the step S6 and the positioning control process (step S7) of the electric current command value calculating program PG1 are altered. And, in the second embodiment, the steering control system 41 is provided with a flag F for determining whether the automatic steering mode is suspended or not.

The automatic steering mode suspended flag F is initialized to be "0" because the steering control apparatus 11 is initialized to be in the manual steering mode just after an ignition key of the vehicle is turned on. When the steering control apparatus 11 is changed from the manual steering mode to the automatic steering mode by operating the mode selector switch, the automatic steering mode suspended flag F is still "0". And, as shown in Figure 8, if the electric current command value I1 for the assist control becomes more than the threshold value K1 (i.e., the answer at step S5 is "No"), the automatic steering mode is deactivated and the automatic steering mode suspended flag F is set to "1" in a step S6' of the electric current command value calculating program PG1 in the second embodiment.

In the positioning control process (step S700) in the second embodiment, as shown in Figure 9, it is determined whether the automatic steering mode suspended flag F is "1" or not (step S77) after the step S72 that is explained in the first embodiment. If the automatic steering mode suspended flag F is set to "1" (i.e., the answer at step S77 is "Yes"), the control system 41 perceives that the automatic steering mode is activated again after the automatic steering mode is deactivated (i.e., after the vehicle running under the automatic steering control is ceased, it resumed). In turn, the control system 41 resets the automatic steering mode suspended flag F to "0" (step S78), and initializes the time-integrated value θ4 to be "0" (step S79), and then causes the program to proceed to step S74 that is explained in the first embodiment.

The electric current command value calculating program PG1 is executed at a predetermined time interval, and if the automatic steering mode is active, the positioning control process (step S700) is executed. And, if the automatic steering mode suspended flag F is "0" (i.e., the answer at step S77 is "No"), the time-integrated value θ4 is calculated (step S73), and the steps following step S74 is executed with using the time-integrated value θ4.

According to the abovementioned structure, as the time-integrated value θ4 is reset before the steering control apparatus 11 is changed from the manual steering mode to the automatic steering mode, it can be avoided that the steered wheels 50 are steered at the abnormally high angular velocity just after the steering control apparatus 11 is changed from the manual steering mode to the automatic steering mode.

### (Modifications)

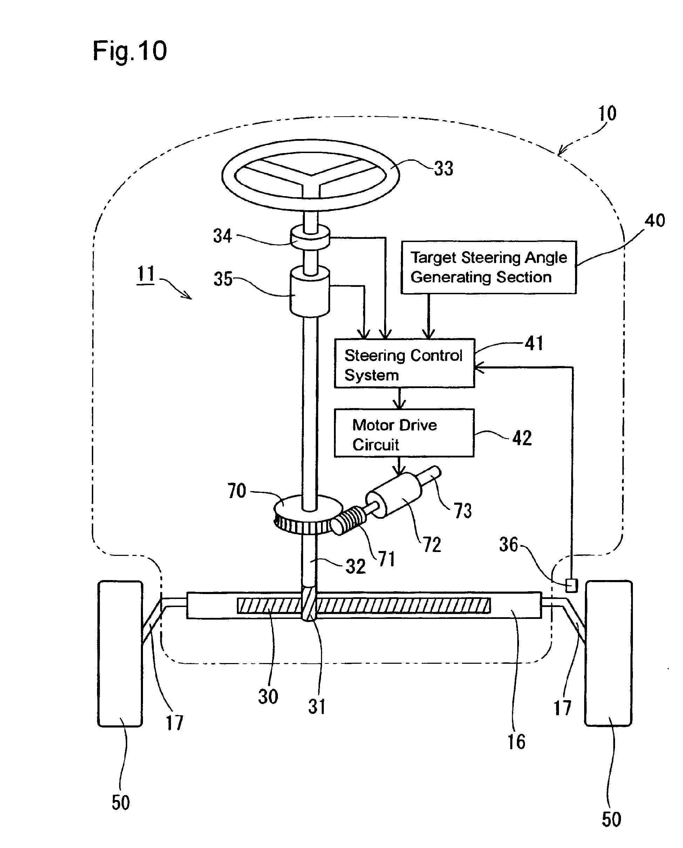

The present invention is not limited to those in the foregoing embodiments. For example, the modifications as enumerated below are encompassed in the technological scope of the present invention.
(1) Although the steering control apparatus 11 in the abovementioned embodiments is so constituted that the electric motor 19 is connected to the rack shaft 16 extends between the steered wheels 50, it may be so constituted, as shown in Figure 10, that a worm wheel 70 is fixedly mounted on the middle portion of the steering shaft 32 to make meshing engagement with a worm gear 71 that is secured to an output shaft of an electric motor 72.
(2) Although the abovementioned embodiment is so constituted that "the actual steering angle of the steered wheels" recited in the claimed invention is detected by the steering angle sensor 34 that is provided on the upper end portion of the steering shaft 32, the motor rotational angle detected by the motor rotational angle sensor 25 or 73 provided on the electric motor 19 or 72 shown in Figure 1 or 10 may be used as "the actual steering angle of the steered wheels" recited in the claimed invention.
(3) It may be so constituted that the steering control system 41 outputs an informing signal for informing the changeover from the automatic steering mode to the manual steering in the first and second embodiments. The steering control apparatus 11 lights a sign lamp or buzzes with being triggered by the informing signal, so that the driver can know that the automatic steering mode is cancelled without driver's operation to know it.

An improved steering control apparatus is provided, wherein a driver can easily operate a steering wheel while the automatic steering mode is active so as to steer the vehicle in coping with any situation. The steering control system 41 that is provided in the steering control apparatus can determine whether a driver operates a steering wheel 33 by checking whether the electric current command value 11 for the assist control is more than a predetermined threshold value K1 while the automatic steering mode is active. And, as the operation of the steering wheel 33 is given precedence to continuation of the automatic steering control in determining whether the steering control apparatus 11 is changed from the automatic steering mode to the manual steering mode, the driver can easily rotate the steering wheel 33 in a state where the electric motor 19 generates enough assist force.

## Claims

1. A steering control apparatus (11) for an automobile vehicle (10) provided with a steering control system (41) or changing the steering control apparatus (11) between the manual steering mode wherein an electric motor (19) assists driver's steering operation to steer steered wheels (50) under assist control and an automatic steering mode wherein the steered wheels (50) are steered by the electric motor (19) under positioning control to run the vehicle (10) to a predetermined target position without the driver's manual steering operation, the steering control system (41) comprising:
an assist control section (41A) for calculating an electric current command value for the assist control based on a loaded torque (T1) applied to a rotational shaft of a steering wheel (33);
a positioning control section (41B) for calculating an electric current command value for the positioning control based on a deviation between a target steering angle (θ1) determined according to the target position and an actual steering angle (θ2) of the steered wheels (50) ;
an electric current changeover section (41D) for outputting the electric current command value (I1) for the assist control as an electric current command value for the electric motor (19) in the manual steering mode and the sum of the electric current command value (I1) for the assist control and the electric current command value (I2) for the positioning control as the electric current command value for the electric motor (19) in the automatic steering mode;
a command value checking section (41e) for determining whether the electric current command value (I1) for the assist control is more than a predetermined threshold value (K1) in the automatic steering mode; and
the electric current changeover section (41D) being operable to change the steering control apparatus (11) from the automatic steering mode to the manual steering mode when the electric current command value (I1) for the assist control is more than the predetermined threshold value (K1) while the automatic steering mode is active, and to continue the automatic steering mode when the electric current command value (I1) for the assist control is not more than the predetermined threshold value (K1) while the automatic steering mode is active;
the steering control system (41) being **characterized in that**
the positioning control section (41B) comprises a time-integrated value calculating section (41K) for varying the electric current command value (I2) for the positioning control according to the time-integrated value calculated by integrating the deviation with respect to time, and a time-integrated value reset section for resetting a last time-integrated value before the automatic steering mode is resumed from the manual steering mode.

2. The steering control apparatus (11) as set forth in Claim 1, wherein the electric current changeover section (41D) is operable to change the steering control apparatus (11) from the automatic steering mode to the manual steering mode by stopping output of the electric current command value (I2) for the positioning control from the positioning control section (41B), and to continue the automatic steering mode by allowing the output of the electric current command value (I2) for the positioning control from the positioning control section (41B).

3. The steering control apparatus (11) as set forth in Claim 1, wherein the electric current changeover section (41D) causes the steering control system (41) to output an informing signal for informing the changeover from the automatic steering mode to the manual steering mode.

## Patentansprüche

1. Lenksteuergerät (11) für ein Kraftfahrzeug (10), das mit einem Lenksteuersystem (41) ausgestattet ist zur Schaltung des Lenksteuergeräts (11) zwischen der manuellen Lenkbetriebsart, bei welcher ein Elektromotor (19) einem Lenkvorgang eines Fahrers Hilfestellung leistet, um gelenkte Räder (50) unter Hilfssteuerung zu lenken, und einer automatische Lenkbetriebsart, bei welcher die gelenkten Räder (50) durch den Elektromotor (19) unter Positionierungssteuerung gelenkt werden, um das Fahrzeug (10) ohne den manuellen Lenkvorgang des Fahrers zu einer vorbestimmten Zielposition zu fahren, wobei das Lenksteuersystem (41) aufweist:
einen Hilfssteuerabschnitt (41A) zur Berechnung eines elektrischer-Strom-Befehlswerts für die Hilfssteuerung auf der Grundlage eines Lastdrehmoments (T1), das auf eine Drehwelle eines Lenkrads (33) angewendet wird,
einen Positionierungssteuerabschnitt (41B) zur Berechnung eines elektrischer-Strom-Befehlswerts für die Positionierungssteuerung auf der Grundlage einer Abweichung zwischen einem gemäß der Zielposition bestimmten Ziellenkwinkel (θ1) und einem tatsächlichen Lenkwinkel (θ2) der gelenkten Räder (50);
einen elektrischer-Strom-Umschaltabschnitt (41D) zur Ausgabe des elektrischer-Strom-Befehlswerts (I1) für die Hilfssteuerung als einen elektrischer-Strom-Befehlswert für den Elektromotor (19) bei der manuellen Lenkbetriebsart und der Summe des elektrischer-Strom-Befehlswerts (I1) für die Hilfssteuerung und des elektrischer-Strom-Befehlswerts (I2) für die Positionierungssteuerung als den elektrischer-Strom-Befehlswert für den Elektromotor (19) bei der automatischen Lenkbetriebsart;
einen Befehlswertprüfabschnitt (41C) zur Bestimmung, ob der elektrischer-Strom-Befehlswert (I1) für die Hilfssteuerung größer als ein vorbestimmter Schwellwert (K1) bei der automatischen Lenkbetriebsart ist; und
wobei der elektrischer-Strom-Umschaltabschnitt (41D) betreibbar ist, um das Lenksteuergerät (11) von der automatischen Lenkbetriebsart in die manuelle Lenkbetriebsart zu schalten, wenn der elektrischer-Strom-Befehlswert (I1) für die Hilfssteuerung größer als der vorbestimmte Schwellwert (K1) ist, während die automatische Lenkbetriebsart aktiv ist, und die automatische Lenkbetriebsart fortzusetzen, wenn der elektrischer-Strom-Befehlswert (I1) für die Hilfssteuerung nicht größer als der vorbestimmte Schwellwert (K1) ist, während die automatische Lenkbetriebsart aktiv ist;
wobei das Lenksteuersystem (41) **dadurch gekennzeichnet ist, dass**
der Positionierungssteuerabschnitt (41B) aufweist einen Zeitintegrationswertberechnungsabschnitt (41K) zur Variation des elektrischer-Strom-Befehlswerts (I2) für die Positionierungssteuerung gemäß dem Zeitintegrationswert, der durch Integration der Abweichung in Bezug auf die Zeit berechnet ist, und einen Zeitintegrationswertrücksetzabschnitt zum Rücksetzen eines letzten Zeitintegrationswerts, bevor die automatische Lenkbetriebsart von der manuellen Lenkbetriebsart aus wieder aufgenommen wird.

2. Lenksteuergerät (11) nach Anspruch 1, wobei der elektrischer-Strom-Umschaltabschnitt (41D) betreibbar ist, um das Lenksteuergerät (11) von der automatischen Lenkbetriebsart in die manuelle Lenkbetriebsart zu schalten, indem eine Ausgabe des elektrischer-Strom-Befehlswerts (I2) für die Positionierungssteuerung von dem Positionierungssteuerabschnitt (41B) gestoppt wird, und um die automatische Lenkbetriebsart fortzusetzen, indem die Ausgabe des elektrischer-Strom-Befehlswerts (I2) für die Positionierungssteuerung von dem Positionierungssteuerabschnitt (41B) zugelassen wird.

3. Lenksteuergerät (11) nach Anspruch 1, wobei der elektrischer-Strom-Umschaltabschnitt (41D) das Lenksteuersystem (41) veranlasst, ein Informationssignal zur Information über das Umschalten von der automatischen Lenkbetriebsart in die manuelle Lenkbetriebsart auszugeben.

## Revendications

1. Appareil de commande de direction (11) pour un véhicule automobile (10) pourvu d'un système de commande de direction (41) pour changer l'appareil de commande de direction (11) entre le mode de direction manuelle où un moteur électrique (19) aide une opération de direction d'un conducteur pour diriger des roues dirigées (50) sous une commande d'assistance et un mode de direction automatique où les roues dirigées (50) sont dirigées par le moteur électrique (19) sous une commande de positionnement pour mener le véhicule (10) à une position cible prédéterminée sans l'opération de direction manuelle du conducteur, le système de commande de direction (41) comprenant:
une section de commande d'assistance (41A) pour calculer une valeur de commande de courant électrique pour la commande d'assistance sur la base d'un couple chargé (T1) appliqué à un arbre de rotation d'un volant de direction (33);
une section de commande de positionnement (41B) pour calculer une valeur de commande de courant électrique pour la commande de positionnement sur la base d'une déviation entre un angle de braquage cible (θ1) déterminé selon la position cible et un angle de braquage effectif (θ2) des roues dirigées (50);
une section de changement de courant électrique (41D) pour faire sortir la valeur de commande de courant électrique (I1) pour la commande d'assistance comme étant une valeur de commande de courant électrique pour le moteur électrique (19) dans le mode de direction manuelle et la somme de la valeur de commande de courant électrique (I1) pour la commande d'assistance et la valeur de commande de courant électrique (I2) pour la commande de positionnement comme étant la valeur de commande de courant électrique pour le moteur électrique (19) dans le mode de direction automatique;
une section de vérification de valeur de commande (41e) pour déterminer si la valeur de commande de courant électrique (I1) pour la commande d'assistance est supérieure à une valeur seuil prédéterminée (k1) dans le mode de direction automatique; et
la section de changement de courant électrique (41D) étant exploitable pour changer l'appareil de commande de direction (11) du mode de direction automatique au mode de direction manuelle lorsque la valeur de commande de courant électrique (I1) pour la commande d'assistance est supérieure à la valeur seuil prédéterminée (k1) tandis que le mode de direction automatique est actif, et pour poursuivre le mode de direction automatique lorsque la valeur de commande de courant électrique (I1) pour la commande d'assistance n'est pas supérieure à la valeur seuil prédéterminée (k1) tandis que le mode de direction automatique est actif;
le système de commande de direction (41) étant **caractérisé en ce que**
la section de commande de positionnement (41B) comprend une section calculant une valeur intégrée dans le temps (41k) pour faire varier la valeur de commande de courant électrique (I2) pour la commande de positionnement selon la valeur intégrée dans le temps calculée en intégrant la déviation par rapport au temps, et une section de réinitialisation de valeur intégrée dans le temps pour réinitialiser une dernière valeur intégrée dans le temps avant que le mode de direction automatique ne reprenne depuis le mode de direction manuelle.

2. Appareil de commande de direction (11) selon la revendication 1, dans lequel la section de changement de courant électrique (41D) est exploitable pour changer l'appareil de commande de direction (11) du mode de direction automatique au mode de direction manuelle en arrêtant une sortie de la valeur de commande de courant électrique (I2) pour la commande de positionnement depuis la section de commande de positionnement (41B), et pour poursuivre le mode de direction automatique en autorisant la sortie de la valeur de commande de courant électrique (I2) pour la commande de positionnement depuis la section de commande de positionnement (41B).

3. Appareil de commande de direction (11) selon la revendication 1, dans lequel la section de changement de courant électrique (41D) amène le système de commande de direction (41) à faire sortir un signal d'information pour informer du changement du mode de direction automatique au mode de direction manuelle.
